# EUROPEAN PATENT APPLICATION

(11) **EP 2 096 410 A2**
(43) Date of publication of application: **02.09.2009**
(21) Application number: 09153219.2
(22) Date of filing: 19.02.2009
(51) Int. Cl.: G01C 21/00, G01C 21/36

(54) **Navigation device and navigation program**

(30) Priority: 28.02.2008 JP 2008047581
(71) Applicant: Aisin AW Co., Ltd., Fujii-cho Anjo-shi, Aichi 444-1192 (JP)
(72) Inventor: Nishiura, Takuya, Okazaki-shi Aichi 444-8564 (JP)
(74) Representative: TBK-Patent

(57) **Abstract**

A navigation device includes a current position detection unit (2), an information storage unit (3), a calculation unit (4a) that calculates an estimated travel time from the current position to a facility position, a search unit (4b) that sets an area within a specified range from the current position as a vicinity area and searches facilities in the vicinity area, and a control unit (4c) that displays the searched facilities in a list. When the vehicle is on a road, the control unit, to display the list, divides the vicinity area into a front-left side area, a front-right side area, a rear-left side area, and a rear-right side area in relation to the vehicle, sorts by area the searched facilities in the order of distance from the vehicle, and further sorts the facilities in the order of the front-left side area, the front-right side area, the rear-left side area, and the rear-right side area. When the vehicle is not on a road, the control unit, to display the list, divides the vicinity area into a short distance area, an intermediate distance area, and a long distance area in relation to the vehicle, sorts by area the searched facilities in the short distance area and the long distance area in the order of distance from the vehicle and the searched facilities in the intermediate distance area in the order of the shortest estimated travel time first, further sorts the facilities in the order of the short distance area, the intermediate distance area, and the long distance area.

## Description

The present invention relates to navigation devices and navigation programs that search facilities in a vicinity area to perform guidance.

In a search for facilities in the vicinity of a current position, a method is known in which a list is displayed by calculating a direct distance to each of the searched facilities and sorting the searched facilities in the order of the distance from the current position. However, in this method, there are cases in which a facility searched as being at the shortest distance is not the facility that can be reached in the shortest time when traveled by a vehicle. Hence, another method is known in which when facilities belonging to a category that is designated by a user are searched and narrowed by the vicinity of the current position, a list is displayed not in the order of the distance from the current position, but in the order of the shortest travel distance or the shortest estimated travel time first by performing a route search toward individual facility and calculating the travel distance or the estimated travel time to each facility (refer to Japanese Unexamined Patent Application Publication No.2003-232641).

However, with the method of Japanese Unexamined Patent Application Publication No.2003-232641, if there are many corresponding facilities, searching takes time and the load on the processing device (CPU) of a navigation device installed in a vehicle becomes heavy, since a route search is performed toward all the corresponding facilities.

The present invention has been devised in order to solve the above problems, and thus it is an object thereof is to reduce the processing load on the navigation device and to make it possible to quickly display the facility list in the order of the shortest travel distance or the shortest estimated travel time first, when facilities in the vicinity area are searched and displayed in a list.
This object is solved by a navigation device as set out in claim 1, 2 or 3, or alternatively by a method as set out in claim 4, 5 or 6, and further alternatively by a computer program product as set out in claim 7.
According to a first aspect of the present invention, a navigation device that searches facilities in a vicinity area and displays a result in a list, includes: a current position detection unit that detects a current position of a vehicle; an information storage unit that stores map information including facility data; a calculation unit that calculates an estimated travel time from the current position of the vehicle to a facility position; a search unit that sets an area within a specified range from the current position of the vehicle as the vicinity area and searches facilities in the vicinity area; and a control unit that displays the searched facilities in a list. When the vehicle is on a road, the control unit, to display the list, divides the vicinity area into a front-left side area, a front-right side area, a rear-left side area, and a rear-right side area in relation to the vehicle, sorts by area the searched facilities in the order of distance from the vehicle, and further sorts the facilities in the order of the front-left side area, the front-right side area, the rear-left side area, and the rear-right side area. When the vehicle is not on a road, the control unit, to display the list, divides the vicinity area into a short distance area, an intermediate distance area, and a long distance area in relation to the vehicle, sorts by area the searched facilities in the short distance area and the long distance area in the order of distance from the vehicle and the searched facilities in the intermediate distance area in the order of the shortest estimated travel time first, and further sorts the facilities in the order of the short distance area, the intermediate distance area, and the long distance area.
According to a second aspect of the present invention, a navigation device that searches facilities in a vicinity area and displays a result in a list, includes: a current position detection unit that detects a current position of a vehicle; an information storage unit that stores map information including facility data; a calculation unit that calculates an estimated travel time from the current position of the vehicle to a facility position; a search unit that sets an area within a specified range from the current position of the vehicle as the vicinity area and searches facilities in the vicinity area; and a control unit that, to display the list, divides the vicinity area into a front-left side area, a front-right side area, a rear-left side area, and a rear-right side area in relation to the vehicle, sorts by area the searched facilities in the order of distance from the vehicle, and further sorts the facilities in the order of the front-left side area, the front-right side area, the rear-left side area, and the rear-right side area.
According to a third aspect of the present invention, a navigation device that searches facilities in a vicinity area and displays a result in a list, includes: a current position detection unit that detects a current position of a vehicle; an information storage unit that stores map information including facility data; a calculation unit that calculates an estimated travel time from the current position of the vehicle to a facility position; a search unit that sets an area within a specified range from the current position of the vehicle as the vicinity area and searches facilities in the vicinity area; and a control unit that, to display the list, divides the vicinity area into a short distance area, an intermediate distance area, and a long distance area in relation to the vehicle, sorts by area the searched facilities in the short distance area and in the long distance area in the order of distance from the vehicle and the searched facilities in the intermediate distance area in the order of the shortest estimated travel time first, and further sorts the facilities in the order of the short distance area, the intermediate distance area, and the long distance area.
According to a fourth aspect of the present invention, a program for controlling a navigation device that searches facilities in a vicinity area and displays a result in a list, causes a computer to perform the steps of: detecting a current position; searching facilities in a vicinity area; when the vehicle is on a road, to display the list, dividing the vicinity area into a front-left side area, a front-right side area, a rear-left side area, and a rear-right side area in relation to the vehicle, sorting by area the searched facilities in the order of distance from the vehicle, and further sorting the facilities in the order of the front-left side area, the front-right side area, the rear-left side area, and the rear-right side area; and when the vehicle is not on a road, to display the list, dividing the vicinity area into a short distance area, an intermediate distance area, and a long distance area in relation to the vehicle, sorting by area the searched facilities in the short distance area and in the long distance area in the order of distance from the vehicle, sorting the searched facilities in the intermediate distance in the order of the shortest estimated travel time first by route search, and further sorting the facilities in the order of the short distance area, the intermediate distance area, and the long distance area.

The above exemplary implementations reduce the processing load on the navigation device and make it possible to quickly display the facility list in the order of the shortest estimated travel time first.

### BRIEF DESCRIPTION OF THE DRAWINGS

FIG. 1 is a block diagram showing an example of a navigation device according to an embodiment of the present invention;

FIGS. 2A and 2B show an example of listing facilities obtained by a vicinity search; and

FIGS. 3A and 3B show another example of listing facilities obtained by the vicinity search.

### DETAILED DESCRIPTION OF PREFERRED EMBODIMENT

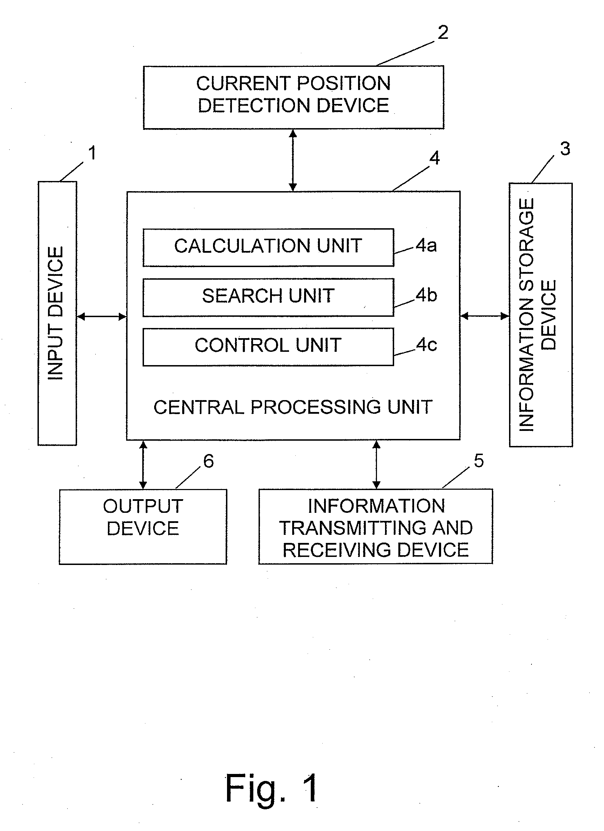

Hereinafter, an embodiment of the present invention will be described. FIG. 1 is a diagram showing an example of a navigation device according to the embodiment of the present invention. The navigation device includes an input device 1, a current position detection device 2, an information storage device 3, a central processing unit 4, an information transmitting and receiving device 5, and an output device 6. The input device 1 includes a keyboard, a mouse, a touch panel, an operation key, and the like to input information such as a category and the like that are used in a search for a departure point, a destination, and facilities in a vicinity area. The current position detection device 2 detects information regarding a current position of a vehicle. The information storage device 3 stores map data, road data, intersection data, facility data of various categories, navigation data necessary for a route search, display/voice guidance data necessary for route guidance, a program (an application and/or an operating system (OS)) for performing a map display, a route search, and guidance such as voice guidance and the like. The central processing unit 4 includes: a calculation unit 4a that calculates an estimated travel time from the current position of the vehicle to a facility position; a search unit 4b that sets an area within a specified range from the current position of the vehicle as the vicinity area and searches facilities in the vicinity area; and a control unit 4c that, to display the searched facilities in a list, divides the vicinity area into plural areas, sorts the facilities in each of the divided areas in the order of distance, sorts the facilities in a specific area in the order of estimated travel time, and further prioritizes the divided areas and sorts the facilities. The central processing unit 4 performs, as a navigator processing unit, map display processing, route search processing, and display/voice guidance processing necessary for route guidance, in addition to a control of an overall system. The information transmitting and receiving device 5 transmits and receives information regarding vehicle driving, for example, road information and traffic information, detects information regarding the current position of the vehicle, and further transmits and receives information regarding the current position. The output device 6 includes a display, a speaker, and other output devices for outputting information regarding facilities listed by the vicinity search and route guidance.

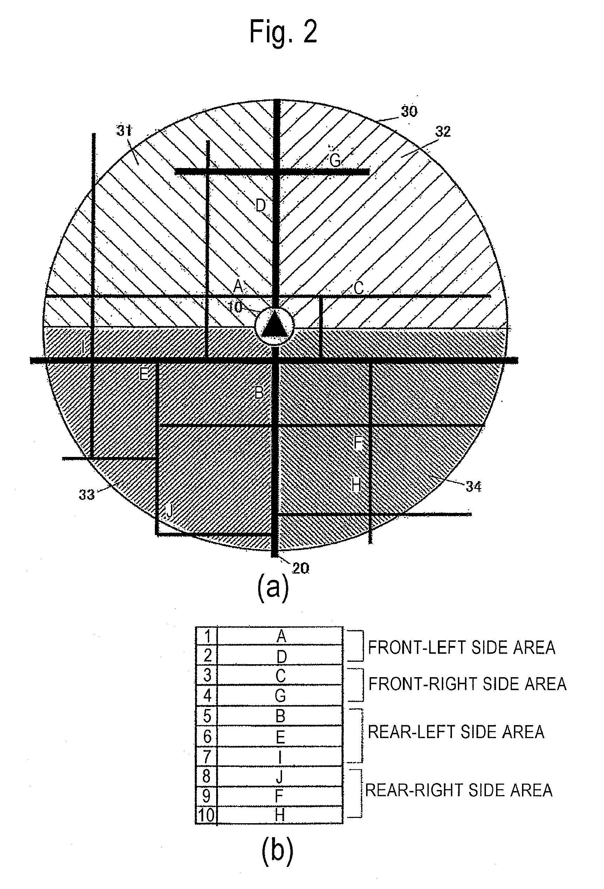

FIGS. 2A and 2B show an example of guidance by listing and displaying facilities obtained by the vicinity search. FIG. 2A is a drawing that explains a sorting method of searched facilities. FIG. 2B shows a facility list to be displayed.
FIG. 2A shows a case in which a vehicle 10 travels on a road 20 upward in the drawing. In this case, the vicinity search is performed at the position shown in the drawing by the navigation device installed in the vehicle, and a range 30 is the vicinity area to search that is centered on the vehicle. The area for the vicinity search is set small when there are a large number of facilities of various categories such as public facilities, convenience stores, restaurants, gas stations, and the like, but set large when there are a small number of facilities. In performing a search, designating a category is optional. In this example, symbols A to H in FIGS. 2A and 2B indicate the searched facilities, and are assigned in the order of the shortest direct distance from the vehicle first. If the facilities are displayed in the list in the order of the shortest direct distance from the vehicle first, there are cases in which the facility searched as being at the shortest distance is not the facility that can be reached by vehicle in the shortest time. For this reason, conventionally, guidance has been performed by performing route searches toward the facilities A to H, calculating estimated travel times to the respective facilities, and displaying the list in the order of the shortest estimated travel time first. However, this method requires time to provide guidance and increases the processing load on the navigation device installed in the vehicle.

In the example shown in FIGS. 2A and 2B, the searched facilities are displayed in the list substantially in the order of the shortest estimated travel time first, without performing a route search. To this end, the vicinity area 30 is divided into a front-left side area 31, a front-right side area 32, a rear-left side area 33, and a rear-right side area 34, in relation to the vehicle 10. The searched facilities in each area are sorted in the order of direct distance from the vehicle. For example, the facilities A to H are sorted in the order of A, D for the front-left side area 31, in the order of C, G for the front-right side area 32, in the order of B, E, I, and J for the rear-left side area 33, in the order of F, H for the rear-right side area 34. The facilities in the same area can be reached under almost the same conditions. Therefore, a result acquired by sorting the facilities in the order of the shortest direct distance first is almost the same as a result acquired by sorting in the order of the shortest estimated travel time first. Furthermore, it is possible to reach a destination facility in the left area that requires just a left turn earlier than that in the right area that requires a right turn, and a destination facility in the front area that requires just a forward linear travel earlier than that in the rear area that requires a backward travel. Hence, the facilities in the front area are sorted in the order of the front-left side area 31, the front-right side area 32. As for the rear area, it normally takes less time to go backward through a left turn; therefore, the rear-left side area 33 can be reached earlier than the rear-right side area 34. Hence, the facilities in the rear area are sorted in the order of the rear-left side area 33, the rear-right side area 34. The facilities in the same area are sorted in the order of direct distance from the vehicle. Further, the facilities are sorted in the order of the front-left side area, the front-right side area, the rear-left side area, and the rear-right side area in relation to the vehicle. That is, in this example, the facilities are sorted in the order of A, D, C, G, B, E, I, J, F, and H, and the list is displayed (refer to FIG. 2B). In this way, the facilities can be listed substantially in the order of the shortest travel time first without performing a route search and displayed on a guidance screen. Note that the vicinity area is preferably divided into the right side area and left side area of the vehicle, using the road traveled by the vehicle as a reference. When the vehicle is not on a road, for example, when the vehicle is parked in a parking area or a service area that is along the road, the vicinity area may be divided into the right side area, the left side area or the like using the road as a reference. Note that the example described above is applicable to a left-hand traffic. In the case of a right-hand traffic, the right and the left are inverted.

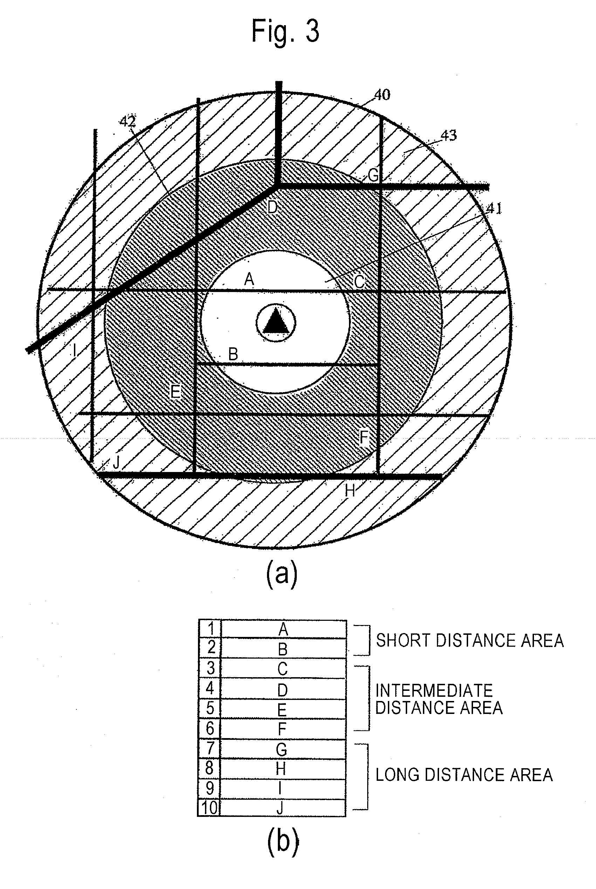

FIGS. 3A and 3B show another example of listing the facilities obtained by the vicinity search. FIG. 3A is a drawing that explains a sorting method of searched facilities. FIG. 3B shows a facility list to be displayed.
FIG. 3A shows a case in which the vicinity search is performed when the vehicle 10 is not on a road, for example, parked in a facility like a parking lot, and a range 40 is the vicinity area to search that is centered on the vehicle. Symbols A to H in FIGS. 3A and 3B indicate the searched facilities, and are assigned in the order of the shortest direct distance from the vehicle first; however, if a list is displayed in this order, there are cases in which the facility searched as being at the shortest distance is not the facility that can be reached in the shortest time, and if route searches are performed to all the facilities, the processing load increases. In this example, by dividing the vicinity area into plural sections and performing route searches only toward the facilities in a part of the sections, the processing load is reduced and the list can be displayed substantially in the order of the shortest estimated travel time of the vehicle first.

Since the vehicle is parked, the same conditions exist for any direction in which the vehicle subsequently travels, the vicinity area to be searched is divided by distance into a short distance area 41, an intermediate distance area 42, and a long distance area 43, and the facilities are sorted in the order of the shortest distance first. It is considered that, for a place very close to the vehicle like the short distance area, it does not make much difference in the travel time even if route searches are performed, and for a place very far from the vehicle like the long distance, the processing load of route searches is heavy; therefore, the facilities in the short distance area and the long distance area are sorted in the order of the shortest direct distance first. For the intermediate distance area 42, after performing route searches, the facilities are sorted in the order of the shortest estimated travel time first. Thus, the facilities in the short distance area and the long distance area are sorted in the order of the shortest direct distance first, while the facilities in the intermediate distance area are sorted in the order of the shortest estimated travel time first after route searches, and the facilities are sorted in the order of the short distance area, the intermediate distance area, and the long distance area. In the case of this example, the list is displayed in the order of A, B, C, E, F, D, G, H, I, and J (refer to FIG 3 B). Thus, the processing load on the navigation device is reduced and the list can be displayed in the order of the shortest travel time first. The above described is a case in which a vehicle is parked in a parking lot; however, the example of listing the facilities obtained by the vicinity search of FIGS. 3A and 3B is also applicable to a case in which a vehicle can move to any direction under the same conditions even on a road.

While various features have been described in conjunction with the examples outlined above, various alternatives, modifications, variations, and/or improvements of those features and/or examples may be possible. Accordingly, the examples, as set forth above, are intended to be illustrative. Various changes may be made without departing from the broad spirit and scope of the underlying principles.
As described above, a navigation device includes a current position detection unit (2), an information storage unit (3), a calculation unit (4a) that calculates an estimated travel time from the current position to a facility position, a search unit (4b) that sets an area within a specified range from the current position as a vicinity area and searches facilities in the vicinity area, and a control unit (4c) that displays the searched facilities in a list. When the vehicle is on a road, the control unit, to display the list, divides the vicinity area into a front-left side area, a front-right side area, a rear-left side area, and a rear-right side area in relation to the vehicle, sorts by area the searched facilities in the order of distance from the vehicle, and further sorts the facilities in the order of the front-left side area, the front-right side area, the rear-left side area, and the rear-right side area. When the vehicle is not on a road, the control unit, to display the list, divides the vicinity area into a short distance area, an intermediate distance area, and a long distance area in relation to the vehicle, sorts by area the searched facilities in the short distance area and the long distance area in the order of distance from the vehicle and the searched facilities in the intermediate distance area in the order of the shortest estimated travel time first, further sorts the facilities in the order of the short distance area, the intermediate distance area, and the long distance area.

## Claims

1. A navigation device that searches facilities in a vicinity area and displays a result in a list, comprising:
a current position detection unit (2) that is arranged to detect a current position of a vehicle;
an information storage unit (3) that is arranged to store map information including facility data;
a calculation unit (4a) that is arranged to calculate an estimated travel time from the current position of the vehicle to a facility position;
a search unit (4b) that is arranged to set an area within a specified range from the current position of the vehicle as a vicinity area (30; 40) and searches facilities (A-J) in the vicinity area; and
a control unit (4c) that is arranged to display the searched facilities in a list, wherein
the control unit is arranged to divide, in order to display the list, when the vehicle is on a road, the vicinity area into a front-left side area (31), a front-right side area (32), a rear-left side area (33), and a rear-right side area (34) in relation to the vehicle, to sort by area the searched facilities in the order of distance from the vehicle, and further to sort the facilities in the order of the front-left side area, the front-right side area, the rear-left side area, and the rear-right side area, and
the control unit is further arranged to divide in order to display the list, when the vehicle is not on a road, the vicinity area into a short distance area (41), an intermediate distance area (42), and a long distance area (43) in relation to the vehicle, to sort by area the searched facilities in the short distance area and the long distance area in the order of distance from the vehicle and the searched facilities in the intermediate distance area in the order of the shortest estimated travel time first, and further to sort the facilities in the order of the short distance area, the intermediate distance area, and the long distance area.

2. A navigation device that searches facilities in a vicinity area and displays a result in a list, comprising:
a current position detection unit (2) that is arranged to detect a current position of a vehicle;
an information storage unit (3) that is arranged to store map information including facility data;
a calculation unit (4a) that is arranged to calculate an estimated travel time from the current position of the vehicle to a facility position;
a search unit (4b) that is arranged to set an area within a specified range from the current position of the vehicle as a vicinity area (30) and searches facilities (A-J) in the vicinity area; and
a control unit (4c) that is arranged to divide, in order to display the list, the vicinity area into a front-left side area (31), a front-right side area (32), a rear-left side area (33), and a rear-right side area (34) in relation to the vehicle, to sort by area the searched facilities in the order of distance from the vehicle, and further to sort the facilities in the order of the front-left side area, the front-right side area, the rear-left side area, and the rear-right side area.

3. A navigation device that searches facilities in a vicinity area and displays a result in a list, comprising:
a current position detection unit (2) that detects a current position of a vehicle;
an information storage unit (3) that stores map information including facility data;
a calculation unit (4a) that is arranged to calculate an estimated travel time from the current position of the vehicle to a facility position;
a search unit (4b) that is arranged to set an area within a specified range from the current position of the vehicle as a vicinity area (40) and searches facilities in the vicinity area; and
a control unit (4c) that is arranged, in order to display the list, divide the vicinity area into a short distance area (41), an intermediate distance area (42), and
a long distance area (43) in relation to the vehicle, to sort by area the searched facilities in the short distance area and the long distance area in the order of distance from the vehicle and the searched facilities in the intermediate distance area in the order of the shortest estimated travel time first, and further sorts the facilities in the order of the short distance area, the intermediate distance area, and the long distance area.

4. A method for controlling a navigation device that searches facilities in a vicinity area and displays a result in a list, the program causing a computer to perform the steps of:
detecting a current position;
searching facilities (A-J) in a vicinity area (30; 40);
when the vehicle is on a road, to display the list, dividing the vicinity area into a front-left side area (31), a front-right side area (32), a rear-left side area (33), and a rear-right side area (34) in relation to a vehicle, sorting by area the searched facilities in the order of distance from the vehicle, and further sorting the facilities in the order of the front-left side area, the front-right side area, the rear-left side area, and the rear-right side area; and
when the vehicle is not on a road, to display the list, dividing the vicinity area into a short distance area (41), an intermediate distance area (42), and a long distance area (43) in relation to a vehicle, sorting by area the searched facilities in the short distance area and the long distance area in the order of distance from the vehicle and the searched facilities in the intermediate distance in the order of the shortest estimated travel time first by route search, and further sorting the facilities in the order of the short distance area, the intermediate distance area, and the long distance area.

5. A method for controlling a navigation device that searches facilities in a vicinity area and displays a result in a list, the program causing a computer to perform the steps of:
detecting a current position;
searching facilities (A-J) in a vicinity area (30); and,
in order to display the list, dividing the vicinity area into a front-left side area (31), a front-right side area (32), a rear-left side area (33), and a rear-right side area (34) in relation to a vehicle, sorting by area the searched facilities in the order of distance from the vehicle, and further sorting the facilities in the order of the front-left side area, the front-right side area, the rear-left side area, and the rear-right side area.

6. A method for controlling a navigation device that searches facilities in a vicinity area and displays a result in a list, the program causing a computer to perform the steps of:
detecting a current position;
searching facilities (A-J) in a vicinity area (40); and,
in order to display the list, dividing the vicinity area into a short distance area (41), an intermediate distance area (42), and a long distance area (43) in relation to a vehicle, sorting by area the searched facilities in the short distance area and the long distance area in the order of distance from the vehicle and the searched facilities in the intermediate distance in the order of the shortest estimated travel time first by route search, and further sorting the facilities in the order of the short distance area, the intermediate distance area, and the long distance area.

7. A computer program product for a computer, comprising software code portions for performing the steps of any one of the claims 4 to 6, when the program is run on the computer.
